# EUROPÄISCHE PATENTANMELDUNG

(11) **EP 3 696 217 A1**
(43) Veröffentlichungstag der Anmeldung: **19.08.2020**
(21) Anmeldenummer: 19156637.1
(22) Anmeldetag: 12.02.2019
(51) Int. Cl.: C08J 9/00, C08J 9/06, C08J 9/08

(54) **SCHÄUMBARE, DÄMMSCHICHTBILDENDE MEHRKOMPONENTEN-ZUSAMMENSETZUNG UND DEREN VERWENDUNG**

(71) Anmelder: Hilti Aktiengesellschaft, 9494 Schaan (LI)
(72) Erfinder: Paetow, Mario, 86899 Landsberg am Lech (DE); Miller, Jekaterina, 73760 Ostfildern (DE)
(74) Vertreter: Hilti Aktiengesellschaft Corporate Intellectual Property

(57) **Zusammenfassung**

Die vorliegende Erfindung betrifft eine schäumbare, dämmschichtbildende Mehrkomponenten-Zusammensetzung auf Epoxid-Amin Basis und deren Verwendung zum Ausschäumen von Öffnungen, Kabel- und Rohrdurchführungen und Fugen zum Zwecke des Brandschutzes.

## Beschreibung

Die vorliegende Erfindung betrifft eine schäumbare, dämmschichtbildende Mehrkomponenten-Zusammensetzung auf Epoxid-Amin Basis und deren Verwendung zum Ausschäumen von Öffnungen, Kabel- und Rohrdurchführungen und Fugen zum Zwecke des Brandschutzes.

In Europa müssen Brandschutzsysteme den Brandschutzanforderungen der EN 1366-3 (Annex B) genügen, welche im Wesentlichen eine Temperaturweiterleitung von Feuerseite nach Nicht-Feuerseite um max. 180 K an definierten Stellen erlaubt. Die Feuerwiderstandsdauer muss für bestimmte Zeit, z.B. 60 min, 90 min oder 120 min gewährleistet werden.

Als Bindemittel für Montage-, Isolierungs- und Brandschutzschäume werden oft häufig Polyurethane verwendet, welche in der Härterkomponente ein oder mehrere Isocyanate enthalten, die seit längerer Zeit als Risikostoff gelten. Aus diesem Grund bestehen Bestrebungen weniger gesundheitsgefährdende Bindemittel als Basis zur Herstellung von Montage-, Isolierungs- und Brandschutzschäumen zur Verfügung zu stellen.

So beschreiben die beiden europäischen Patentanmeldungen EP3327069A1 und EP3095809A1 schäumbare, dämmschichtbildende Mehrkomponenten-Zusammensetzungen mit alkoxysilanfunktionellen Polymeren, welche mit Wasser vernetzt werden.

Ferner beschreibt die europäische Patentanmeldung EP3176483 A1 einen Brandschutzschaum auf anorganischer Basis mit einem hydraulischen Bindemittel, einer Treibmittelmischung sowie einer thermisch expandierbaren Verbindung.

Die vorgenannten Brandschutzschäume stellen Alterativen zu konventionellen Brandschutzschäumen auf Basis von Polyurethanen dar. Nichtsdestotrotz ist es weiterhin erstrebenswert Brandschutzschäume auf Basis anderer Bindemittel bereitzustellen, welche hinsichtlich ihrer Brandschutzeigenschaften mindestens vergleichbar sind mit konventionellen Brandschutzschäumen auf Polyurethanbasis.

Mehrkomponenten-Zusammensetzung auf Grundlage von härtbaren Epoxidharzen und Aminen sind seit langem bekannt. Diese werden regelmäßig als Beschichtungsmittel, Klebstoffe, chemische Dübel und Schäume in verschiedenen Anwendungsbereichen verwendet. Brandschutzschäume, die den Brandschutzanforderungen nach DIN/EN genügen auf Epoxid-Amin Basis sind jedoch nicht bekannt.

Aufgabe der vorliegenden Erfindung ist es daher Schäume, insbesondere Ortschäume, bereitzustellen, die wenigstens ein Epoxidharz und wenigstens ein Amin enthalten, und für den Brandschutz geeignet sind und hinsichtlich ihrer Brandschutzeigenschaften mindestens vergleichbar sind mit konventionellen Brandschutzschäumen auf Polyurethanbasis. Insbesondere ist es Aufgabe der vorliegenden Erfindung einen Brandschutzschaum auf Epoxid-Amin Basis bereitzustellen, der verbesserte Expansionseigenschaften im Vergleich zu konventionellen Brandschutzschäumen auf Polyurethanbasis aufweist.

Diese Aufgabe wird durch die Mehrkomponenten-Zusammensetzung nach Anspruch 1 gelöst. Bevorzugte Ausführungsformen sind den Unteransprüchen zu entnehmen, welche wahlweise miteinander kombiniert werden können.

Gegenstand der vorliegenden Erfindung ist ferner die Verwendung der erfindungsgemäßen Mehrkomponenten-Zusammensetzung gemäß Anspruch 13.

Gegenstand der Erfindung ist demnach eine schäumbare, dämmschichtbildende Mehrkomponenten-Zusammensetzung umfassend
i) mindestens ein Epoxidharz,
ii) mindestens ein gegenüber Epoxidgruppen reaktives Amin,
iii) mindestens ein dämmschichtbildendes Brandschutzadditiv, sowie
iv) eine Treibmittelmischung,
wobei die einzelnen Bestandteile der Treibmittelmischung vor der Verwendung der Zusammensetzung reaktionsinhibierend voneinander getrennt sind und das mindestens eine Epoxidharz vor der Verwendung reaktionsinhibierend von dem mindestens einen gegenüber Epoxidgruppen reaktiven Amin getrennt ist.

Im Sinne der vorliegenden haben die hier und in der nachfolgenden Beschreibung verwendeten Begriffe die folgende Bedeutung:
- bedeutet *"chemische Intumeszenz"* die Bildung einer voluminösen, isolierenden Ascheschicht durch aufeinander abgestimmte Verbindungen, die bei Hitzeeinwirkung miteinander reagieren;
- bedeutet "*physikalische Intumeszenz"* die Bildung einer voluminösen, isolierenden Schicht durch Aufblähen einer Verbindung, die bei Hitzeeinwirkung Gase freisetzt, wodurch das Volumen der Verbindung um ein Vielfaches des ursprünglichen Volumens zunimmt;
- bedeutet "*dämmschichtbildend*"*,* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- ist ein "*Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "*Kohlenstoffgerüstbildner*" bezeichnet;
- ist ein "*Säurebildner*" eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff "*Dehydrierungskatalysator*" verwendet;
- ist ein "*Gasbildner*" eine Verbindung, die sich bei erhöhter Temperatur unter Entwicklung inerter, d.h. nicht-brennbarer Gase zersetzt und gegebenenfalls das erweichte Bindemittel zu einem Schaum aufbläht (Intumeszenz);
- ist ein "*Aschekrustenstabilisator*" eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Gasbildner, oder der physikalischen Intumeszenz gebildet wird, stabilisiert.

Im Rahmen der vorliegenden Beschreibung wird der Begriff "*Zusammensetzung*" synonym für den Begriff der erfindungsgemäßen "*Mehrkomponenten-Zusammensetzung"* verwendet.

Die schäumbare, dämmschichtbildende Mehrkomponenten-Zusammensetzung umfasst erfindungsgemäß mindestens ein Epoxidharz.

Als Epoxidharz sind in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel "Epoxy Resins" der Encyclopedia of Polymer Sciences and Technology, Vol. 9, Wiley-Interscience, 2004, zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a. Reaktionsprodukte von Epichlorhydrin mit Bisphenol A;
b. Reaktionsprodukte von Epichlorhydrin mit Bisphenol F;
c. Epoxy-Novolake auf Phenol- oder Cresolbasis;
d. Aromatische Glycidylaminharze;
e. Epoxidharze ohne aromatische Struktureinheiten;
sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) ≤ 550 g/Val; Reaktionsprodukte von Epichlorhydrin mit Bisphenol F, dem einfachsten Vertreter der Novolake, mit einem EEW ≤ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW ≤ 200 g/Val, wie beispielsweise Epilox® A 17-01, Epilox® A 18-00, Epilox® A 19-00, Epilox® A 19-02, Epilox® A 19-03 oder Epilox® A 19-04 der Leuna-Harze GmbH, dargestellt durch die nachfolgende Formel, worin 0 ≤ n ≤ 0,2; 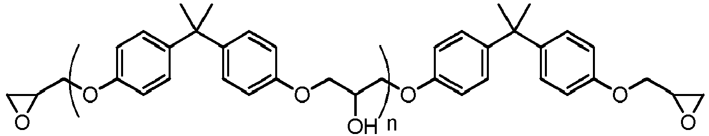 Reaktionsprodukte von Epichlorhydrin mit Bisphenol F, dem einfachsten Vertreter der Novolake, mit einem EEW ≤ 185 g/Val, wie beispielsweise Epilox® F 16-01 oder Epilox® F 17-00 der Leuna-Harze GmbH, dargestellt durch die nachfolgende Formel, worin 0 ≤ n ≤ 0,2; 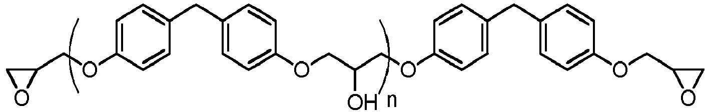 sowie Gemische zweier oder mehrerer derartiger Epoxidharze in beliebigem Verhältnis und in beliebigen Reinheitsgraden, wie beispielsweise Epilox® AF 18-30, Epilox® 18-50 oder Epilox® T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromo-neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder-A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Je nach Funktionalität des Epoxidharzes können der Vernetzungsgrad des Bindemittels und somit zum einen die Festigkeit des entstehenden Schaumes, als auch deren elastische Eigenschaften eingestellt werden.

Das Epoxidharz ist bevorzugt in der Mehrkomponenten-Zusammensetzung in einem Anteil von 25 bis 55 Gew.-%, besonders bevorzugt in einem Anteil von 35 bis 45 Gew.-%, bezogen auf das Gesamtgewicht der Mehrkomponenten-Zusammensetzung enthalten.

Durch Zugabe mindestens eines Reaktivverdünners kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktivverdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktivverdünner kombiniert werden. Geeignete Beispiele sind Allylglycidylether, Butylglycidylether (BGE), 2-Ethylhexylglycidylether, Alkylglycidylether (C₁₂-C₁₄), Tridecylglycidylether, Phenylglycidylether (PGE), *o*-Kresolglycidylether (CGE), *p*-*tert*-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

Die schäumbare, dämmschichtbildende Mehrkomponenten-Zusammensetzung umfasst erfindungsgemäß ferner mindestens ein gegenüber Epoxidgruppen reaktives Amin. Gegenüber Epoxidgruppen reaktive Amine sind dem Fachmann grundsätzlich bekannt.

Erfindungsgemäß ist das mindestens eine Epoxidharz vor der Verwendung reaktionsinhibierend von dem mindestens einen gegenüber Epoxidgruppen reaktiven Amin getrennt, um eine Aushärtung vor der Verwendung zu verhindern.

Das gegenüber Epoxidgruppen reaktive Amin ist vorzugsweise ein Diamin oder Polyamin, das aus der Gruppe bestehend aus aliphatischen, alicyclischen, aromatischen und araliphatischen Aminen ausgewählt ist, und weist pro Molekül im Mittel mindestens zwei an ein Stickstoffatom gebundene reaktive Wasserstoffatome auf. Das Amin kann aus den für Epoxid-Amin-Systeme üblichen und dem Fachmann bekannten Aminen ausgewählt werden.

Beispiele geeigneter Amine sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan (1,3-BAC), 1,2-Bis(aminomethyl)cyclohexan (1,2-BAC), Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7, 10-trioxatridecan, 4-Aminomethyl-1,8-diaminooctan, 2-Butyl-2-ethyl-1,5-diaminopentan, N, N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2-Methylpentan-1,5-diamin (DYTEK A), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0^{2,6}]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, 2-(2,2,6,6-tetramethylpiperidin-4-yl)propan-1,3-diamin und N-Aminoethylpiperazin (N-AEP),

Bevorzugte gegenüber Epoxidgruppen reaktive geeignete Amine in der erfindungsgemäßen Mehrkomponenten-Zusammensetzung sind 1,3-Bis(aminomethyl)-cyclohexan (1,3-BAC), 2-Methylpentan-1,5-diamin (DYTEK A) und N-Aminoethylpiperazin (N-AEP).

Die Amine können sowohl einzeln als auch im Gemisch von zwei oder mehreren der genannten Amine eingesetzt werden.

Erfindungsgemäß umfasst die Mehrkomponenten-Zusammensetzung mindestens ein dämmschichtbildendes Brandschutzadditiv, wobei das dämmschichtbildende Additiv sowohl eine einzelne Verbindung als auch ein Gemisch von mehreren Verbindungen umfassen kann.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich in der Mehrkomponenten-Zusammensetzung enthalten sein, nämlich bevorzugt in einer Menge von 10 bis 70 Gew.-% bezogen auf das Gesamtgewicht der Mehrkomponenten-Zusammensetzung. Wird die isolierende Schicht durch physikalische Intumeszenz gebildet, ist das dämmschichtbildende Additiv vorzugsweise in einer Menge von 10 bis 40 Gew.-% bezogen auf das Gesamtgewicht der Mehrkomponenten-Zusammensetzung enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 12 bis 35 Gew.-% und besonders bevorzugt 15 bis 30 Gew.-%, bezogen auf das Gesamtgewicht der Mehrkomponenten-Zusammensetzung.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere Flammschutzmittel zugesetzt werden, wie Phosphatester, halogenhaltige Verbindungen wie z.B. Tri-(2-chlorisopropyl)-phosphat (TCPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf die gesamte Zusammensetzung, enthalten sein.

Als Treibmittelmischung sind alle gängigen chemischen Treibmittel geeignet, die durch chemische Reaktion zwischen zwei Bestandteilen aktiviert werden, d.h. ein Gas als eigentliches Treibmittel bilden. Erfindungsgemäß sind die einzelnen Bestandteile der Treibmittelmischung vor der Verwendung der Zusammensetzung reaktionsinhibierend voneinander getrennt.

Dementsprechend enthält die Zusammensetzung erfindungsgemäß eine Treibmittelmischung, welche vorzugsweise Verbindungen umfasst, die nach deren Vermischen unter Bildung von Kohlendioxid (CO₂), Wasserstoff (H₂) oder Sauerstoff (O₂) miteinander reagieren.

In einer Ausführungsform umfasst die Treibmittelmischung eine Säure und eine Verbindung, die mit Säuren unter Bildung von Kohlendioxid reagieren kann.

Als Verbindungen, die mit Säuren unter Bildung von Kohlendioxid reagieren können, können carbonat- und hydrocarbonathaltige Verbindungen, insbesondere Metall- oder (insbesondere quarternäre) Ammoniumcarbonate verwendet werden, wie Carbonate von Alkali - oder Erdalkalimetallen, zum Beispiel CaCO₃, NaHCO₃, Na₂CO₃, K₂CO₃, (NH₄)₂CO₃ und dergleichen, wobei Kreide (CaCO₃) bevorzugt ist. Dabei können verschiedene Typen von Kreiden mit unterschiedlichen Korngrößen und unterschiedlicher Oberflächenbeschaffenheit, wie beispielsweise beschichtete oder unbeschichtete Kreide, oder Mischungen von zwei oder mehreren davon verwendet werden. Bevorzugt werden beschichtete Kreidetypen verwendet, da sie langsamer mit der Säure reagieren und somit kontrolliertes Aufschäumen bzw. abgestimmte Aufschäumungs- und Aushärtezeit gewährleisten.

Als Säure kann jede saure Verbindung verwendet werden, die in der Lage ist, mit carbonat- oder hydrogecarbonathaltigen Verbindungen unter Abspaltung von Kohlendioxid zu reagieren, wie etwa Phosphorsäure, Salzsäure, Schwefelsäure, Ascorbinsäure, Polyacrylsäure, Benzoesäure, Toluolsulfonsäure, Weinsäure, Glycolsäure Milchsäure; organische Mono-, Di- oder Polycarbonsäuren, wie Essigsäure, Chloressigsäure, Trifluoressigsäure, Fumarsäure, Maleinsäure, Zitronensäure oder dergleichen, Aluminiumdihydrogenphosphat, Natriumhydrogensulfat, Kaliumhydrogensulfat, Aluminiumchlorid, Harnstoffphosphat und andere säurefreisetzende Chemikalien oder Mischungen von zwei oder mehreren davon. Die Säure erzeugt das Gas als eigentliches Treibmittel.

Als Säure-Komponente kann eine wässrige Lösung einer anorganischen und/oder organischen Säure, benutzt werden. Ferner können gepufferte Lösungen von Zitronen-, Wein-, Essig-, Phosphorsäure und dergleichen verwendet werden.

In einer alternativen Ausführungsform umfasst die Treibmittelmischung Verbindungen, die bei Reaktion miteinander Wasserstoff freisetzten. Hierzu kommen Reaktionen von:
(i) einem oder mehreren unedlen Metallen (z.B. Aluminium, Eisen oder Zink) mit Basen (z.B. ein oder mehrere Alkalimetallhydroxide, wie Natrium-, Kalium- oder Lithiumhydroxid) oder mit ein oder mehreren Säuren, wie oben bei den Carbonaten definiert (vorzugsweise anorganische Säure);
(ii) Metallhydriden (z.B. Natriumhydrid oder Lithiumaluminiumhydrid) mit Wasser, oder
(iii) einer Verbindung, die Si-gebundene Wasserstoffatome aufweist (z.B. Polymethylhydrogensiloxan, bekannt auch als Polymethylhydrosiloxan, aber auch andere Polyalkyl- oder Polyarylhydrogensiloxane) mit Protonendonoren (z.B. Wasser). Geeignet sind u.a. lineare Polyhydrogensiloxane, Tetramere, Copolymere von Dimethysiloxan und Methylhydrosiloxan, Trimethylsilylterminierte Polyhydrogensiloxane, Hydrid-terminierte Polydimethylsiloxane, Triethylsilyl-terminierte Polyethylhydrosiloxane, Hydrid-terminierte Copolymere aus Polyphenylmethylsiloxan und Methylhydrosiloxan und dergleichen.

Diese Verbindungen sind bevorzugt in einer Menge von 0,1 bis 15 Gew.-%, stärker bevorzugt von 3 bis 13 Gew.-% und am stärksten bevorzugt von 4 bis 7 Gew.-%, bezogen auf die gesamte Zusammensetzung, enthalten.

In einer weiter alternativen Ausführungsform umfasst die Treibmittelmischung Verbindungen, die bei Reaktion miteinander Sauerstoff freisetzen können, wie etwa durch die Reaktion von Peroxiden (z.B. Wasserstoffperoxid oder Wasserstoffperoxid freisetzende Verbindungen, einschließlich fester Verbindungen, wie Wasserstoffperoxid-Harnstoff-Komplex und Harnstoffphosphat) mit Metalloxiden und/oder Basen.

Diese Verbindungen sind bevorzugt in einer Menge von 0,1 bis 5 Gew.-%, stärker bevorzugt von 1,5 bis 4 Gew.-% und am stärksten bevorzugt von 2 bis 3 Gew.-%, bezogen auf die gesamte Zusammensetzung, enthalten.

Die erfindungsgemäße Zusammensetzung kann mindestens einen Katalysator enthalten. Hierdurch kann die Reaktion des Epoxidharzes mit Aminen beschleunigt werden, wobei ein Absinken bzw. Zusammenfallen des gebildeten Schaums verhindert oder zumindest stark verlangsamt werden kann. Der Katalysator bewirkt durch die schnellere Hautbildung an der Oberfläche der aufgeschäumten Zusammensetzung auch, dass die Oberfläche über einen kürzeren Zeitraum klebrig bleibt.

Sofern ein Katalysator verwendet wird, kann dieser in einer Menge bis zu 5 Gew.-%, bevorzugt von 0% bis 4 Gew.-% und stärker bevorzugt von 0% bis 0,5 Gew.-%, bezogen auf die gesamte Zusammensetzung, in der Zusammensetzung enthalten sein.

Bevorzugt wird ein Katalysator für die Härtung, d.h. die Reaktion des Epoxidharzes mit Aminen verwendet. Als Katalysatoren können beispielsweise Benzylalkohol, tertiäre Amine, Imidazole oder tertiäre Aminophenole, Organophosphine, Lewis-Basen oder - säuren wie Phosphorsäureester, oder Gemische von zwei oder mehr davon verwendet werden.

Beispiele für geeignete Katalysatoren sind insbesondere Tris-2,4,6-dimethylaminomethylphenol, 2,4,6-Tris(dimethylamino)phenol, Bis[(dimethylamino)methyl]phenol, 1,1,3,3-Tetramethylguanidin (TMG), und 1,8-Diazabicyclo[5.4.0]undec-7-ene (DBU). Ein geeignetes Katalysatorgemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik, Deutschland).

Um dem gebildeten Schaum eine höhere Stabilität zu verleihen, müssen die gebildeten Zellen bis zur Aushärtung des Bindemittels stabil bleiben, um den Kollaps der polymeren Schaumstruktur zu verhindern. Eine Stabilisierung wird umso notwendiger, je niedriger die Dichte des Schaumstoffes sein soll, d.h. je größer die Volumenexpansion ist. Eine Stabilisierung wird gewöhnlich mittels Schaumstabilisatoren erreicht.

Sofern erforderlich kann die erfindungsgemäße Zusammensetzung daher ferner einen Schaumstabilisator enthalten. Als Schaumstabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1 -Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt. Besonders bevorzugt werden EO/PO-Blockcopolymere eingesetzt.

Die Schaumstabilisatoren können in irgendeiner der Komponenten der erfindungsgemäßen Zusammensetzung enthalten sein, so lange diese nicht miteinander reagieren.

In einer Ausführungsform enthält die erfindungsgemäße Zusammensetzung ferner mindestens einen weiteren Bestandteil, ausgewählt unter Weichmachern, Vernetzungsmitteln, organischen und/oder anorganischen Zuschlagstoffen und/oder weiteren Additiven enthält.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass der Schaum / die Formulierung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, C₁₀-C₂₁-Alkylsulfonsäureestern des Phenols und Alkylestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerin mit Epoxidgruppen und Esterderivate der Phosphate. Stärker bevorzugt ist der Weichmacher Bis(2-ethylhexyl)terephthalat, Trihydroxymethylpropylcaprylat, Triethylenglycol-bis(2-ethylhexanoat), 1,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und *n*-Decylsuccinat. Am stärksten bevorzugt ist der Weichmacher ein Phosphatester, da diese sowohl als Weichmacher als auch als Flammschutzmittel wirken können.

In der Zusammensetzung kann der Weichmacher bevorzugt in einer Menge bis zu 40 Gew.-%, weiter bevorzugt bis zu 35 Gew.-% und stärker bevorzugt bis zu 15 Gew.-%, bezogen auf die gesamte Zusammensetzung, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie AntiAbsetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Zwei- oder MehrkomponentenSystem konfektioniert sein, wobei der Begriff Mehrkomponentensystem auch Zweikomponentensysteme mit umfasst. Die Zusammensetzung ist bevorzugt als Zweikomponenten-System konfektioniert, in dem die einzelnen Bestandteile der Treibmittelmischung vor der Verwendung der Zusammensetzung reaktionsinhibierend voneinander getrennt sind und alle Epoxidharze vor der Verwendung der erfindungsgemäßen Zusammensetzung reaktionsinhibierend von den gegenüber Epoxidgruppen reaktiven Amine getrennt sind. Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein. Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben. Das dämmschichtbildende Brandschutzadditiv kann dabei als Gesamtmischung oder in Einzelkomponenten aufgeteilt in einer Komponente oder mehreren Komponenten enthalten sein. Die Aufteilung erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Gegenstand der Erfindung ist ferner die Verwendung einer erfindungsgemäßen Zusammensetzung zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke des Brandschutzes.

Gegenstand der Erfindung ist ferner ein Verfahren zur Schaumstoffherstellung, bei dem die Komponenten eines vorbeschriebenen Schaumstoffsystems am oder nahe am Anwendungsort miteinander vermischt werden und die Mischung am gewünschten Ort, beispielsweise in eine Spalte, in einen Hohlraum oder auf eine Fläche, ein- oder aufgebracht wird. Hierbei handelt es sich um sogenannte Ortschäume.

Gegenstand der Erfindung sind ferner Formkörper, die durch das eben beschriebene Verfahren erhältlich sind, wobei die Schaumstoffherstellung beispielsweise in einer Form erfolgen kann. Denkbar ist hier die Verwendung eines Formkörpers zur Herstellung von Formkörpern, die in Maueröffnungen, z.B. Kabelschotte, eingesetzt werden. Bevorzugt ist auch die Verwendung für Kabel-, Rohr-, Stromschienen- und/oder Fugenabschottungen. Sie können auch bevorzugt als Dichtungen zum Brandschutz und zur Herstellung von Brandschutzklebmassen, zum Beschichtung von Oberflächen und zur Herstellung von Sandwichbauteilen oder Verbundplatten verwendet werden.

Die Formkörper schäumen im Brandfall auf und so wird eine Flammenausbreitung verhindert und sind somit als Dichtelemente, Sicherungsvorrichtungen, Brandsperren oder Verkleidungen geeignet. Man kann diese somit als Verfugungen, Verschlüsse für Kabeldurchbrüche, zum Verschließen von Maueröffnungen verwenden. Auch die Verwendung eines Brandschutzelements als Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten.

Die Erfindung wird nachstehend anhand einiger Beispiele näher erläutert.

### AUSFÜHRUNGSBEISPIELE

### Beispiel 1 - Schaumstoffsvstem durch Wasserstoffentwicklung geschäumt

| **Komponente A** | Menge [Gew.-%] |
|---|---|
| Epoxidharz ¹⁾ | 55,00 |
| Quarzmehl ²⁾ | 10,00 |
| Blähgraphit ³⁾ | 11,53 |
| Ammoniumpolyphosphat ⁴⁾ | 7,10 |
| Aluminiumtrihydrat ⁵⁾ | 2,40 |
| Monopentaerytrithol ⁶⁾ | 1,82 |
| Eisenoxid (Fe₂O₃) ⁷⁾ | 1,08 |
| Actizid/Fungizid ⁸⁾ | 0,07 |
| Polymethylhydrogensiloxan ⁹⁾ | 6,00 |
| Verarbeitungshilfe ¹⁰⁾ | 2,00 |
| Pyrogene Kieselsäure ¹¹⁾ | 3,00 |
| Summe | 100% |

| | |
|---|---|
| ¹⁾ Epilox M884 (LEUNA-Harze GmbH) ²⁾ MILLISIL® W12 der Quarzsandwerke GmbH; mittlere Korngröße 16 µm ³⁾ Nord-Min® 351 der Nordmann-Rassmann, Hamburg, Deutschland ⁴⁾ Exolit® AP 422 der Clairant; durchschnittliche Teilchengröße ∼15 µm ⁵⁾ ATH HN-434 der J.M. Huber Corporation, Finnland ⁶⁾ Charmor® PM 40 der Perstorp Specialty Chemicals AB; Partikelgröße <40 µm; Wassergehalt 0,1% ⁷⁾ Bayferrox 130 M der Lanxess ⁸⁾ Actidide MKP der Thor, Speyer, Deutschland ⁹⁾ Polymethylhydrogensiloxan zur Synthese, Artikelnummer 818063 der Merck ¹⁰⁾ Mischoel LP 71 der BASF ¹¹⁾ Aerosil R202 der Evonik | |

Als Härterkomponente B wurde die Härterkomponente des kommerziell erhältlichen Produkts HIT-RE 100 der Fa. Hilti verwendet.

Zur Herstellung eines erfindungsgemäßen Brandschutzschaumes wurden die vorstehend genannten Bestandteile in eine handelsübliche 2K-Kartusche mit einem Mischungsverhältnis von 3:1 gefüllt und zur Anwendung über einen Statikmischer ausgebracht.

### Vergleichsbeispiel

Als Vergleich diente das kommerziell erhältliche Produkt CP620 der Firma Hilti, ein PUbasierter Brandschutzschaum.

### Bestimmung der Expansionsfaktoren

Zur Bestimmung der Expansionsfaktoren wurden die erfindungsgemäße Mehrkomponenten-Zusammensetzung gemäß Beispiel 1 und die Zusammensetzung gemäß Vergleichsbeispiel frei geschäumt. Aus den freigeschäumten Schäumen wurde jeweils eine zylindrische Probe mit Durchmesser von 4,5 cm und Höhe von 2 cm ausgestanzt. Diese wurde in einem M-TMA-Gerät (Makro-TMA 2 der ASG Analytik-Service in Zusammenarbeit mit Hilti; Baujahr 2004) unter Auflast von 100 g mit 15 K/min auf 620 °C erhitzt. Es wurde der Rückstand in Gew.% und der Expansionsfaktor bezogen auf die ursprüngliche Probe gemessen. Man sieht, dass bei gleichem Rückstand die Expansionskraft von Beispiel 3 höher liegt. Dies bedeutet stärkere Intumeszenz und kann auf bessere Leistung im Brandfall hinweisen.

**Tabelle 1: Ergebnisse der Bestimmung des Expansionsfaktors in M-TMA**

| | Rückstand Gew.-% | Expansionsfaktor |
|---|---|---|
| Vergleichsbeispiel CP620 | 31 | 1,3 |
| Beispiel 1 | 49 | 2,3 |

Wie aus Tabelle 1 zu entnehmen ist, liefern die erfindungsgemäßen Zusammensetzungen einen verbesserten Expansionsfaktor.

### Beispiel 2 - Brandtest

Um beurteilen zu können, ob sich die erfindungsgemäßen Mehrkomponenten-Zusammensetzungen als Brandschutzabschottungen eignen, wurde die erfindungsgemäße Zusammensetzung gemäß Beispiel 1 in eine handelsübliche 2K-Kartusche mit einem Mischungsverhältnis von 3:1 gefüllt und zur Anwendung über einen Statikmischer ausgebracht.

Es wurde ein Brandtest durchgeführt. Hierzu wurde eine Porenbetonwand mit runden Öffnungen von d = 110 mm und 15 cm Tiefe genommen. Der zu testende Schaum wurde in die Öffnung gebracht und in einem Brandtest von 120 min (ETK nach EN 1366-3 (Annex B)) getestet. Auf der dem Feuer abgewandten Seite lag der Temperaturanstieg unterhalb von 180 °C, so dass der Brandtest nach EN 1366-3 (Annex B) als bestanden gilt.

Anhand der Beispiele konnte gezeigt werden, dass sich die erfindungsgemäßen Zusammensetzungen hervorragend als Brandschutzschäume eignen.

## Patentansprüche

1. Schäumbare, dämmschichtbildende Mehrkomponenten-Zusammensetzung umfassend
i) mindestens ein Epoxidharz,
ii) mindestens ein gegenüber Epoxidgruppen reaktives Amin,
iii) mindestens ein dämmschichtbildendes Brandschutzadditiv, sowie
iv) eine Treibmittelmischung,
wobei die einzelnen Bestandteile der Treibmittelmischung vor der Verwendung der Zusammensetzung reaktionsinhibierend voneinander getrennt sind und das mindestens eine Epoxidharz vor der Verwendung reaktionsinhibierend von dem mindestens einen gegenüber Epoxidgruppen reaktiven Amin getrennt ist.

2. Zusammensetzung nach Anspruch 1, wobei die Treibmittelmischung Verbindungen umfasst, die nach deren Vermischen unter Bildung von Kohlendioxid (CO₂), von Wasserstoff (H₂) oder von Sauerstoff (O₂) miteinander reagieren.

3. Zusammensetzung nach Anspruch 2, wobei die Treibmittelmischung mindestens eine Verbindung mit Si-gebundenen Wasserstoffatomen und mindestens einen Protonendonor umfasst.

4. Zusammensetzung nach einem der vorhergehenden Ansprüche, wobei der Anteil des Epoxidharzes an der Zusammensetzung 25 bis 55 Gew.-%, bezogen auf das Gesamtgewicht der Zusammensetzung beträgt.

5. Zusammensetzung nach einem der vorhergehenden Ansprüche, wobei das gegenüber Epoxidgruppen reaktive Amin ausgewählt ist aus der Gruppe bestehend aus aliphatischen, alicyclischen, araliphatischen und aromatischen Aminen, wobei das Amin im Mittel mindestens zwei an ein Stickstoffatom gebundene reaktive Wasserstoffatome pro Molekül aufweist, und bevorzugt ein Polyamin mit mindestens zwei Aminogruppen im Molekül ist.

6. Zusammensetzung nach Anspruch 5, wobei das gegenüber Epoxidgruppen reaktive Amin ausgewählt ist aus der Gruppe bestehend aus 1,3-Bis(aminomethyl)-cyclohexan (1,3-BAC), -Methylpentandiamin (DYTEK A) und N-Aminoethylpiperazin (N-AEP).

7. Zusammensetzung nach einem der vorhergehenden Ansprüche, wobei das dämmschichtbildende Brandschutzadditiv aus Graphit-Interkallationsverbindungen, blähfähigem silikatischen Material oder Kombinationen davon ausgewählt ist.

8. Zusammensetzung nach Anspruch 7, wobei das dämmschichtbildende Brandschutzadditiv ferner einen Aschekrustenstabilisator enthält.

9. Zusammensetzung nach einem der vorhergehenden Ansprüche, wobei die Zusammensetzung ferner einen Schaumstabilisator enthält.

10. Zusammensetzung nach einem der vorhergehenden Ansprüche, wobei die Zusammensetzung ferner einen Katalysator enthält.

11. Zusammensetzung nach Anspruch 10, wobei der Katalysator unter tertiären Aminen ausgewählt ist.

12. Zusammensetzung nach einem der vorhergehenden Ansprüche, wobei die Zusammensetzung ferner mindestens einen weiteren Bestandteil enthält, der aus der Gruppe bestehend aus Weichmachern, anorganischen Füllstoffen und/oder weiteren Additiven ausgewählt ist.

13. Verwendung einer Zusammensetzung nach einem der Ansprüchen 1 bis 12 zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke des Brandschutzes.

14. Formkörper erhalten aus einer Zusammensetzung nach einem der Ansprüche 1 bis 12, wobei die jeweiligen Komponenten miteinander vermischt und die Mischung in einer Form aufgeschäumt werden.
